# EUROPÄISCHE PATENTANMELDUNG

(11) **EP 2 052 595 A1**
(43) Veröffentlichungstag der Anmeldung: **29.04.2009**
(21) Anmeldenummer: 08018295.9
(22) Anmeldetag: 20.10.2008
(51) Int. Cl.: A01C 15/00, A01B 73/04

(54) **Sämaschine**

(30) Priorität: 25.10.2007 DE 102007051044; 09.04.2008 DE 102008017944
(71) Anmelder: Amazonen-Werke H. Dreyer GmbH & Co. KG, 49205 Hasbergen (DE)
(72) Erfinder: Johannaber, Stefan, Jan, 49536 Lienen (DE); Götzen, Nils, 47506 Neukirchen-Vluyn (DE); Schmidt, Christoph, 01217 Dresden (DE); Olderog-Enge, Arndt, 23769 Dänschendorf a/F (DE); Schmidt, Richard, 27798 Hude (DE); Steen, Rüdiger, 27798 Hude (DE)

(57) **Zusammenfassung**

Sämaschine mit einem Tragrahmen, an dem mittels einer Gelenke, deren Gelenkachse horizontal verlaufen, aufweisenden Schwenkvorrichtung zumindest eine mit zumindest einem Vorratsbehälter (12) ausgestattete Dosier- und/oder Vereinzelungsvorrichtung (13) angeordnet ist, wobei der das auszubringendes Material aufnehmende Vorratsbehälter (12) ein an das Dosier- und/oder Vereinzelungsvorrichtung (13) anschließenden, mittels trichterförmig zueinander angeordneter Wandbereiche ausgeformten Auslaufbereich (18) aufweist. Um, mit einfachen Maßnahmen bei einer gattungsgemäßen Sämaschine das Aufnahmevermögen der Vorratsbehälter (12) in einfacher Weise ohne zusätzliche Fördervorrichtungen innerhalb des Vorratsbehälters (12) zu vergrößern, ist vorgesehen, dass der Vorratsbehälter (12) einen erweiterten, mit dem Auslaufbereich verbundenen zusätzliches auszubringendes Material aufnehmenden Behälter und/oder Behälterbereich (17) aufweist, dessen Wände eine derartige Neigung aufweisen, die ein auf einem natürlichen Schüttwinkel und der Schwerkraft beruhendes Nachfördern bei sich in Ausbringstellung befindlichen Vorratsbehälter (12) und/oder Vereinzelungsorgan (13) zu dem Auslaufbereich (18) nicht ermöglichen, dass durch Verschwenken des Vorratsbehälters (12) oder dem das zusätzlich auszubringende Material aufnehmende Behälter und/oder Behälterbereich (17) mit dessen Wandelementen in eine derartige Stellung bringbar sind, dass das sich in dem Zusatzbehälter und/oder Zusatzbehälterbereich (17) befindliche Material aufgrund der Schwerkraft in dem Dosier- und/oder Vereinzelungsorgan (13) zugeordneten Auslaufbereich (18) nachrutscht.

## Beschreibung

Die Erfindung betrifft eine Sämaschine gemäß des Oberbegriffes des Patentanspruches 1

Eine derartige als Einzelkornsämaschine großer Arbeitsbreite ist beispielsweise in der Praxis bekannt geworden. Diese als Großflächeneinzelkornsämaschine ausgebildete Sämaschine weist einen Zentralrahmen auf, der sich über hintere Laufräder und vordere Kupplungsorgane auf dem Boden abstützt. An dem Zentralrahmen ist mittels einer Gelenke, deren Gelenkachsen horizontal und quer zur Fahrtrichtung verlaufen, aufweisenden Schwenkvorrichtung zumindest ein Tragbalken angeordnet, an dem Vorratsbehälter mit Dosier- und/oder Vereinzelungsvorrichtungen und Ausbringorganen angeordnet sind. Das auszubringende Material ist in den Vorratsbehältern enthalten. Der Vorratsbehälter, welcher das auszubringende Material aufnimmt, weist einen an das Dosier- und/oder Vereinzelungsvorrichtung anschließenden und mit trichterförmig zueinander angeordneten Wandbereichen ausgeformten Auslaufbereich auf.

Derartige Vorratsbehälter können in herkömmlicher Bauweise, vor allem wenn der Tragbalken aus zwei aufeinander zuklappbaren Teilen besteht, wobei die Tragbalken mit den Seiten, auf denen die Vorratsbehälter angeordnet sind und die aufeinander zugeklappt werden, keine sehr große Höhenerstreckung aufweisen. Aufgrund der trichterförmigen Anordnung der Auslaufbereiche müssen die Wandbereiche eine ausreichende Neigung aufweisen, damit aufgrund der Schwerkraft das sich im Vorratsbehälter befindlichen Materials in ausreichend sicherer Weise während des Ausbringvorganges zu den Dosier- und Vereinzelungsvorrichtungen nachrutschen kann. Hierdurch ist dann das Fassungsvermögen der Vorratsbehälter begrenzt.

Der Erfindung liegt die Aufgabe zugrunde, mit einfachen Maßnahmen bei einer gattungsgemäßen Sämaschine das Aufnahmevermögen der Vorratsbehälter in einfacher Weise ohne zusätzliche Fördervorrichtungen innerhalb des Vorratsbehälters zu vergrößern.

Diese Aufgabe wird erfindungsgemäß durch die Merkmale des Kennzeichens des Patentanspruches 1 gelöst. Infolge dieser Maßnahmen wird quasi an dem vorhandenen Vorratsbehälter in rucksackähnlicher Form ein zusätzlicher Vorratsbehälter derart nach bzw. zugeordnet, so dass das Aufnahmevermögen des Vorratsbehälters um diesen zusätzlich angeordneten bzw. angeflanschten Bereich vergrößert wird, ohne dass der Vorratsbehälter in der Höhe erhöht werden muss, um das Aufnahmevermögen zu vergrößern. Durch die zwangsweise erfolgende Schwenkbewegung des Tragbalkens um die quer zur Fahrtrichtung verlaufende horizontale Achse beim Wendevorgang, um die Saatgutablagevorrichtungen aus dem Boden zu heben und vom Boden abzuheben, werden die Vorratsbehälter zwangsweise mit verschwenkt, so dass das in dem hinteren Behälterbereich sich befindliche Material in den vorderen und in die Dosier- und Verteilungsvorrichtung mündenden trichterförmigen Bereich hinein rutschen kann.

Eine einfache Ausgestaltung des Vorratsbehälters im unteren Bereich mit dem erweiterten Aufnahmebereich des Vorratsbehälters lässt sich dadurch ausgestalten, dass der Vorratsbehälter ein dachförmiges Bodenelement, welches zumindest teilweise die unteren Wandbereiche bilden, aufweist.

Somit wird der Vorratsbehälter in einfacher Weise im unteren Bereich so ausgestaltet, dass das dachförmige Bodenelement zwischen dem Auslaufbereich und dem das zusätzliche Material aufnehmenden Behälter und/oder Behälterbereich angeordnet ist.

Eine einfache Zuordnung und Anordnung des Vorratsbehälters zu dem Dosier- und/oder Vereinzelungsorgan wird dadurch erreicht, dass unterhalb des dachförmigen Bodenelementes das Dosier- und/oder Vereinzelungsorgan und/oder das dieses umschließende Gehäuse angeordnet ist.

Um zu verhindern, dass Material beim Schwenkvorgang der Vorratsbehälter in Nachfüllstellung beim Wendevorgang oder in Transportstellung aus dem Vorratsbehälter herausgelangen kann, ist vorgesehen, dass dem Vorratsbehälter ein zumindest annähernd dicht verschließender und in seiner Schließstellung mittels geeigneter Mittel verriegelbares Deckelement zugeordnet ist.

Eine gute kompakte Zuordnung des Vorratsbehälters zu dem Gehäuse der Dosier- und Vereinzelungsorgane wird dadurch erreicht, dass das dachförmige Bodenelement und der obere Bereich des das Dosier- und/oder Vereinzelungsorgan umschließenden Gehäuses in annähernder Weise aneinander angepasst ausgebildet sind.

Weitere Einzelheiten der Erfindung sind der Beispielsbeschreibung und den Zeichnungen zu entnehmen. Hierbei zeigen
- Fig. 1: die Sämaschine in Arbeitsstellung, in Teilansicht und perspektivischer Darstellung,
- Fig. 2: die Sämaschine in Arbeitsstellung und Seitenansicht sowie in Teilansicht,
- Fig. 3: die Sämaschine mit in Nachfüllstellung angekippten Vorratsbehältern in Seitenansicht und in Teilansicht und
- Fig. 4: die Sämaschine in Transportstellung, perspektivischer Darstellung und in Teilansicht.

Die Sämaschine weist den sich über die hinteren Laufräder 1 und die vorderen Kupplungselemente 2, die an die Kuppeleinrichtung eines die ziehenden Ackerschleppers angekuppelt werden, abstützenden Tragrahmen 3 auf. Auf der Rückseite des Tragrahmens 3 ist über den eine Schwenkvorrichtung 4 aufweisenden Schwenkrahmen 5 der sich quer zur Fahrtrichtung 6 erstreckende und aus zwei Hälften ausgebildete Tragbalken 7 angeordnet. Die Schwenkvorrichtung 4 weist den Schwenkrahmen 5 auf, der mittels Gelenken 8, deren Gelenkachsen horizontal und quer zur Fahrtrichtung 6 verlaufen, an dem Tragrahmen 3 angelenkt ist. Der Schwenkrahmen 5 weist einen nach oben versetzten Kupplungspunkt 9 auf. Zwischen diesem Kupplungspunkt 9 und dem Tragrahmen 3 ist der doppeltwirkende Hydraulikzylinder 10 der Schwenkvorrichtung 4 angeordnet.

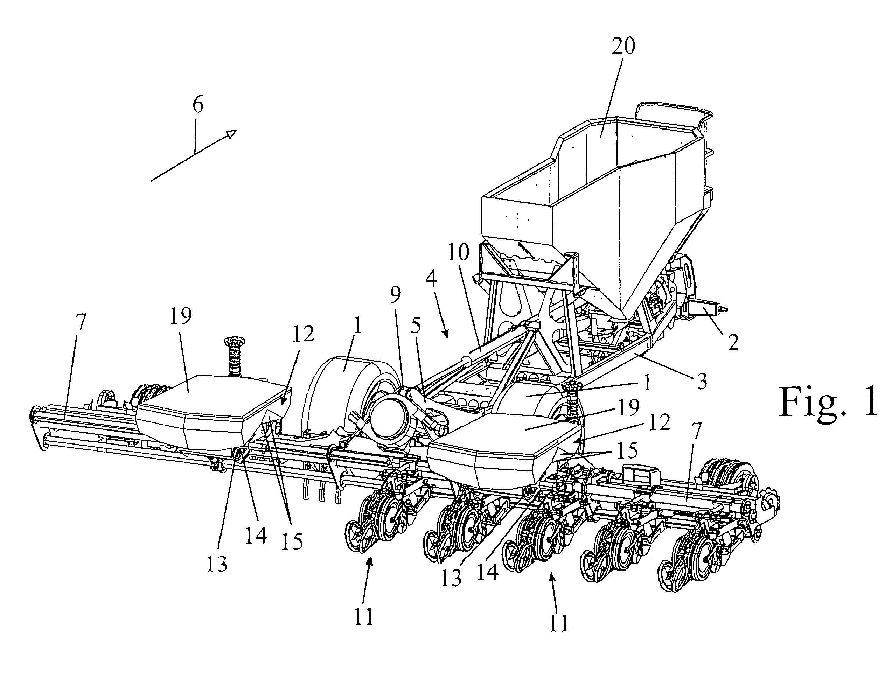

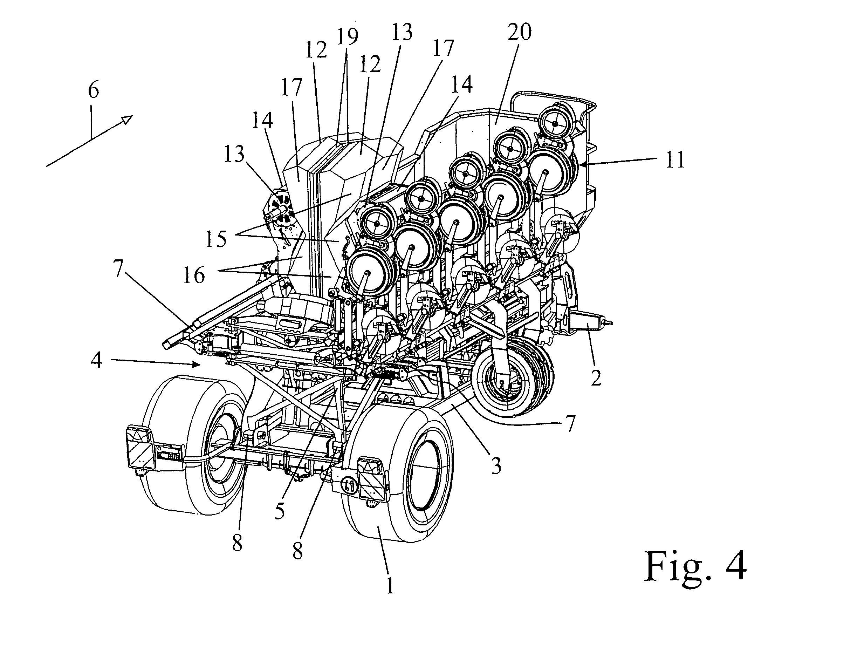

Die beiden Tragbalkenhälften 7 sind jeweils mittels Gelenken, deren Gelenkachse in Fahrtrichtung 6 verlaufen, an dem Schwenkrahmen 5 angeordnet und mittels zwischen dem Schwenkrahmen 5 und dem Tragbalkenhälften 7 angeordneten und als Hydraulikzylinder ausgebildeten Schwenkeinrichtung aus der in Fig. 1-3 dargestellten gestreckten Arbeitslage in die in Fig. 4 dargestellte zusammengeklappte Stellung verbringbar.

An jeder Tragbalkenhälfte 7 sind mittels Kupplungselementen die als Saatgutablageeinrichtungen ausgebildeten Schareinheiten 11 angeordnet, wobei nur die Schareinheiten 11, die an der in Fahrtrichtung 6 gesehenen rechten Tragbalkenhälfte 7 angeordnet sind, dargestellt sind. Des weiteren sind an jeder Tragbalkenhälfte 7 jeweils ein einen Vorratsbehälter 12 aufweisende Dosier- und Vereinzelungseinrichtung 13, die von einem Gehäuse 14 umschlossen ist, angeordnet.

Jeder Vorratsbehälter 12 ist relativ flach ausgebildet und weist eine geringe Höhe auf. Der jeweilige Vorratsbehälter 12 ist durch ein dachförmiges Bodenelement 15, welches zumindest teilweise die unteren Wandbereiche bildet, in zwei Abschnitte 16 und 17 im unteren Bereich aufgeteilt. Hierdurch entstehen zwei hintereinander angeordnete trichterförmige Bereiche 16 und 17 des Vorratsbehälters 12. Der im Ausführungsbeispiel vordere trichterförmige Bereich 16 des Vorratsbehälters weist einen Auslaufbereich 18 auf, der in dem Gehäuse 14 des Dosier- und Vereinzelungseinrichtung 13 ausmündet. Somit schließt der das auszubringende Material aufnehmende Vorratsbehälter in seinem vorderen Bereich an die Dosier- und Vereinzelungsvorrichtung an und führt der Dosier- und Vereinzelungseinrichtung das auszubringende Material zu. Die an der Dosier- und vereinzelungsvorrichtung 13 den ausmündenden Auslaufbereich 18 des Vorratsbehälters bildenden Wandelemente sind in einer derartigen Neigung angeordnet, dass aufgrund des natürlichen Schüttwinkels und der Schwerkraft das Material in Richtung der Dosier- und Vereinzelungseinrichtung 13 nachfließt bzw. nachrutschen kann. Unterhalb des dachförmigen Bodenelementes 15 ist dass das Dosier- oder Vereinzelungsorgan 13 und/oder das dieses umschließende Gehäuse 14 angeordnet. Hierbei sind das dachförmige Bodenelement 15 und der obere Bereich des das Dosier- und Vereinzelungsorgan 13 umschließenden Gehäuses 14 in zumindest annähernder Weise aneinander angepasst ausgebildet, um so eine optimale Raumausnutzung zu erreichen.

Durch die Anordnung des dachförmigen Bodenelementes 15 in dem Vorratsbehälter 12 wird ermöglich, dass der Vorratsbehälter 12 im Ausführungsbeispiel nach hinten zur Aufnahme von zusätzlichen Materialvolumen erweitert werden kann. Somit ist das dachförmige Bodenelement 15 zwischen dem Auslaufbereich 18 und dem das zusätzliche Material aufnehmenden Behälter oder Behälterbereich 17 angeordnet. Mit anderen Worten ausgedrückt: Es ist an den den Auslaufbereich 18 des Vorratsbehälters 12 bildenden Vorratsbehälterbereich 16 quasi ein mit diesem verbundener zusätzlicher und zusätzliches auszubringendes Material aufnehmender Behälter bzw. Behälterbereich 17 angeordnet. Hierdurch lässt sich das Gesamtaufnahmevolumen des der Dosier- und Verteileinrichtung 13 zugeordneten Behälters 12 auch bei sehr flach bauenden, also sich sehr wenig in Höhenrichtung erstreckenden Behältern 12, erheblich erweitern.

Die Wände und Böden des zusätzlichen Behälterbereiches 17 weisen eine derartige Neigung auf, die ein auf einem natürlichen Schüttwinkel und der Schwerkraft beruhendes Nachfördern bei sich in Ausbringstellung befindlichen Vorratsbehälter 12 und/oder Vereinzelungsorgans 13 zu dem Auslaufbereich 18 nicht ermöglichen.

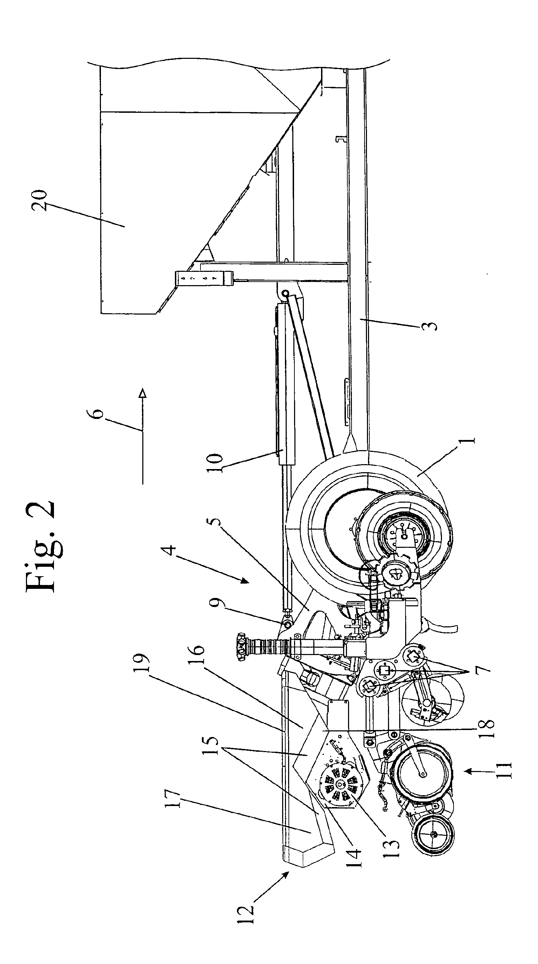

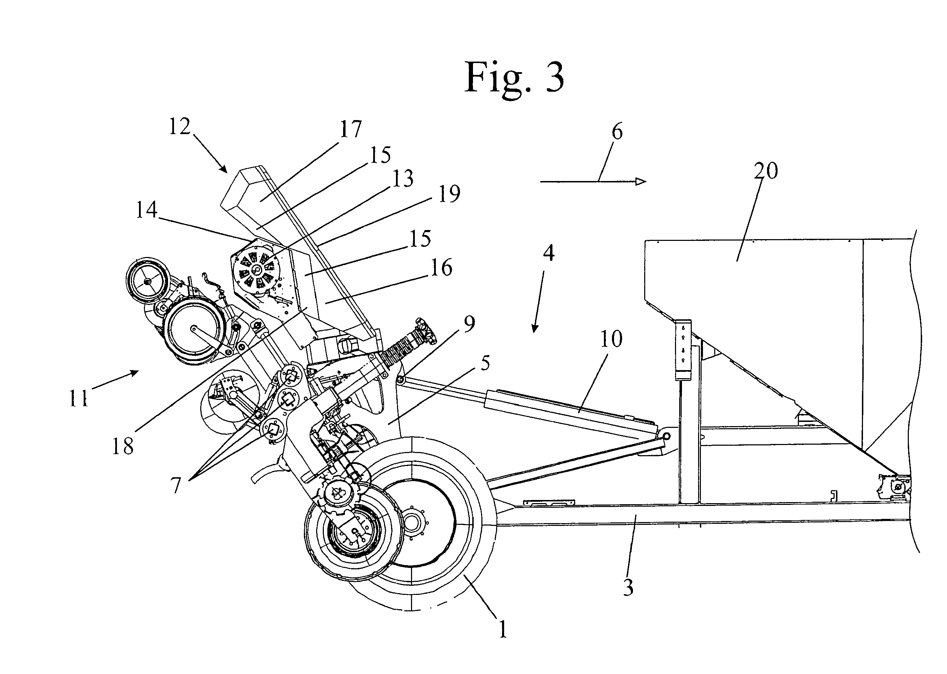

Um dennoch zu ermöglichen, dass das sich in dem zusätzlichen Behälterbereich 17 des Vorratsbehälters 12 befindliche Material dem Auslaufbereich 18 in dem Behälterbereich 16, der mit dem Dosier- und Vereinzelungsorgan 13 verbunden ist, zu ermöglichen, muss der Vorratsbehälter 12 oder der das zusätzlich auszubringende Material aufnehmende Behälter und/oder Behälterbereich 17 mit dessen Wandelementen in eine derartige Stellung verbracht werden, dass das sich in dem Zusatzbehälter und/oder Zusatzbehälterbereich 17 befindliche Material aufgrund der Schwerkraft in dem Dosier- und/oder Vereinzelungsorgan 13 zugeordneten Auslaufbereich 16 nachrutschen kann. Dies geschieht dadurch, dass beim Wendevorgang am Feldende, oder falls erforderlich zu jeder Zeit, bei Unterbrechung des Ausbringvorganges über die Schwenkvorrichtung 4 der Vorratsbehälter 12 aus der in den Fig. 1 und 2 dargestellten Position in die in Fig. 3 dargestellte Nachfüllstellung, in dem die Vorratsbehälter 12 angekippt sind, gebracht wird. Wie leicht ersichtlich ist, kann das sich in den hinteren Vorratsbehälterbereich 17 befindliche Material dann in den vorderen Bereich aufgrund der Neigung der Vorratsbehälterwände und der Schwerkraft nachrutschen.

Um sicher zu stellen, dass kein Material aus den Vorratsbehältern 12 bei der Kippbewegung in der verkippten Stellung aus dem Vorratsbehälter 12 herausgelangen kann, sind den Vorratsbehältern jeweils ein zumindest annähernd dicht verschließender und in seiner Schließstellung mittels geeigneter Mittel verriegelbares Deckelelement 19 zugeordnet.

Wenn die in Transportstellung verbracht werden soll, werden die Tragbalkenhälften 7 um die in Fahrtrichtung 6 verlaufenden Lenkachsen der Gelenke sowie durch Verschwenken des Schwenkrahmens 5 in die in Fig. 4 dargestellte Transportposition verbracht. In dieser Position umschließen die Tragbalken 7 mit den daran angeordneten Sävorrichtungen 11 den sich auf den Tragrahmen 3 angeordneten Vorratsbehälter 20 zur Aufnahme von Düngemitteln.

Weiterhin ist aus der Fig. 4 ersichtlich, dass in der Transportstellung die oberen Bereiche der Vorratsbehälter 12 bzw. die Deckel 19 in einem sehr engen Abstand zueinander angeordnet sind. Somit ergibt sich eine sehr kompakte Bauweise mit einen dennoch vergrößertem Behältervolumen der den Dosier- und Vereinzelungsorganen 13 zugeordneten Vorratsbehälter 12 durch die vorgeschilderten erfindungsgemäßen Merkmale und Maßnahmen.

## Patentansprüche

1. Sämaschine mit einem Tragrahmen, an dem mittels einer Gelenke, deren Gelenkachse horizontal verlaufen, aufweisenden Schwenkvorrichtung zumindest eine mit zumindest einem Vorratsbehälter ausgestattete Dosier- und/oder Vereinzelungsvorrichtung angeordnet ist, wobei der das auszubringendes Material aufnehmende Vorratsbehälter ein an das Dosier- und/oder Vereinzelungsvorrichtung anschließenden, mittels trichterförmig zueinander angeordneter Wandbereiche ausgeformten Auslaufbereich aufweist, **dadurch gekennzeichnet, dass** der Vorratsbehälter (12) einen erweiterten, mit dem Auslaufbereich (18) verbundenen zusätzliches auszubringendes Material aufnehmenden Behälter und/oder Behälterbereich (17) aufweist, dessen Wände eine derartige Neigung aufweisen, die ein auf einem natürlichen Schüttwinkel und der Schwerkraft beruhendes Nachfördern bei sich in Ausbringstellung befindlichen Vorratsbehälter (12) und/oder Vereinzelungsorgan (13) zu dem Auslaufbereich (18) nicht ermöglichen, dass durch Verschwenken des Vorratsbehälters (12) oder dem das zusätzlich auszubringende Material aufnehmende Behälter und/oder Behälterbereich (17) mit dessen Wandelementen in eine derartige Stellung bringbar sind, dass das sich in dem Zusatzbehälter und/oder Zusatzbehälterbereich (17) befindliche Material aufgrund der Schwerkraft in dem Dosier- und/oder Vereinzelungsorgan (13) zugeordneten Auslaufbereich (18) nachrutscht.

2. Sämaschine nach Anspruch 1, **dadurch gekennzeichnet, dass** der Vorratsbehälter (12) ein dachförmiges Bodenelement (15), welches zumindest teilweise die unteren Wandbereiche bilden, aufweist.

3. Sämaschine nach einem oder mehreren der vorstehenden Ansprüche, **dadurch gekennzeichnet, dass** das dachförmige Bodenelement (15) zwischen dem Auslaufbereich (18) und dem das zusätzliche Material aufnehmenden Behälter und/oder Behälterbereich (17) angeordnet ist.

4. Sämaschine nach einem oder mehreren der vorstehenden Ansprüche, **dadurch gekennzeichnet, dass** unterhalb des dachförmigen Bodenelementes (15) das Dosier- und/oder Vereinzelungsorgan (13) und/oder das dieses umschließende Gehäuse (14) angeordnet ist.

5. Sämaschine nach einem oder mehreren der vorstehenden Ansprüche, **dadurch gekennzeichnet, dass** dem Vorratsbehälter (12) ein zumindest annähernd dicht verschließender und in seiner Schließstellung mittels geeigneter Mittel verriegelbares Deckelement (19) zugeordnet ist.

6. Sämaschine nach einem oder mehreren der vorstehenden Ansprüche, **dadurch gekennzeichnet, dass** das dachförmige Bodenelement (15) und der obere Bereich des das Dosier- und/oder Vereinzelungsorgan (13) umschließenden Gehäuses (14) in zumindest annähernder Weise aneinander angepasst ausgebildet sind.
